**Europäisches Patentamt**

**European Patent Office**

**Office européen des brevets**

(19)

(11) Veröffentlichungsnummer: **0 068 482**
**A1**

(12) **EUROPÄISCHE PATENTANMELDUNG**

(21) Anmeldenummer: **82105725.4**

(22) Anmeldetag: **28.06.82**

(51) Int. Cl.³: **G 05 B 19/04**

(30) Priorität: **30.06.81 DE 3125722**

(43) Veröffentlichungstag der Anmeldung: **05.01.83**
**Patentblatt 83/1**

(84) Benannte Vertragsstaaten: **CH FR GB IT LI NL**

(71) Anmelder: **SIEMENS AKTIENGESELLSCHAFT Berlin und München, Postfach 22 02 61,**
**D-8000 München 22 (DE)**

(72) Erfinder: **Edinger, Egon, Friedemann-Bach-Strasse 69,**
**D-8032 Gräfelfing (DE)**
Erfinder: **Hiller, Rudolf, Düsseldorfer Strasse 7,**
**D-8000 München 40 (DE)**
Erfinder: **Pedall, Friedrich, Johann-Clanze-Strasse 53,**
**D-8000 München 70 (DE)**

(54) **Steuerungssystem, insbesondere für automatische Fertigungsanlagen.**

(57) In Fertigungsanlagen werden zur Steuerung des Fertigungsablaufes eine Vielzahl von Sensoren und Stellgliedern benötigt, die meist von einer speicherprogrammierbaren Steuerung abgefragt und angesteuert werden, was eine elektrische Verbindung von jedem Ein- bzw. Ausgang der Steuerschaltung zu jedem Sensor bzw. Stellglied erfordert. Bei einer Vielzahl von Sensoren und Stellgliedern ist der Aufwand für die Maschinenverdrahtung recht erheblich. Dieser Aufwand für die Verdrahtung kann gemäss der Erfindung dadurch ganz erheblich reduziert werden, dass die Sensoren (3a ... 3n) und Stellglieder (4a ... 4n) mit je einer Codier-Decodierschaltung (5a ... 5n bzw. 6a ... 6n) ausgestattet sind und dass die einzelnen Codier-Decodierschaltungen (5a ... 5n bzw. 6a ... 6n) über ein Leitungssystem (7) nach Art eines BUS-Systems untereinander und mit einer Zentraleinheit der speicherprogrammierbaren Steuerung (1) verbunden sind.

SIEMENS AKTIENGESELLSCHAFT
Berlin und München

Unser Zeichen
VPA 81 P 7064 E

0068482

## Steuerungssystem, insbesondere für automatische Fertigungsanlagen

Die Erfindung bezieht sich auf ein Steuerungssystem, insbesondere für automatische Fertigungsanlagen, bei welchen zur Steuerung des Fertigungsablaufes eine Vielzahl von Sensoren und Stellgliedern vorgesehen ist, welche von einer speicherprogrammierbaren Steuerung ansteuerbar und abfragbar sind.

In Fertigungssystemen, insbesondere in automatischen Fertigungsanlagen, sind zur Steuerung des Bewegungs- bzw. Fertigungsablaufes eine große Anzahl von Sensoren und Stellgliedern erforderlich. Hierbei dienen die Sensoren zur Erfassung des Zustandes bzw. der jeweiligen Lage der Stellglieder. Meist sind die Sensoren als Endschalter oder Annäherungsschalter ausgebildet. Die Sensoren und Stellglieder müssen von den heute in der Regel üblichen speicherprogrammierbaren Steuerungen abgefragt und angesteuert werden. Zu diesem Zweck weist die speicherprogrammierbare Steuerschaltung für jeden Endschalter und für jedes Stellglied eine eigene Eingabe- und Ausgabegruppe auf, die über Steuerleitungen mit dem jeweiligen Endschalter bzw. Stellglied verbunden sind. Da bereits mittlere Anlagen eine Vielzahl von Sensoren und Stellgliedern und damit auch Eingabe- und Ausgabegruppen aufweisen, ist der Aufwand für die Verdrahtung der Maschinensteuerung recht erheblich.

Der Erfindung liegt die Aufgabe zugrunde, ein Steuerungssystem, insbesondere für automatische Fertigungsanlagen, zu schaffen, mit dem der Aufwand für die Verdrahtung,

Hs 1 Kow / 23.6.1981

insbesondere bei einer Vielzahl von Sensoren und Stellgliedern, erheblich reduziert werden kann. Diese Aufgabe wird mit dem erfindungsgemäßen Steuerungssystem
dadurch gelöst, daß jeder Sensor und jedes Stellglied
mit je einer Codier-Decodierschaltung ausgestattet ist,
und daß die einzelnen Codier-Decodierschaltungen über
ein Leitungssystem nach Art eines BUS-Systems untereinander und mit einer Zentraleinheit der speicherprogrammierbaren Steuerung verbunden sind.

Solche Leitungssysteme bzw. BUS-Systeme sind aus der
Daten- bzw. Nachrichtentechnik bekannt, wo sie größere
Einheiten untereinander und mit Peripheriegeräten verbinden. Durch die Verwendung von adressierbaren Sensoren
und Stellgliedern, die über das BUS-System untereinander
und mit der Zentraleinheit der speicherprogrammierbaren
Steuerschaltung verbindbar sind, wird die Zahl der sonst
erforderlichen Verbindungsleitungen zwischen den Sensoren
und Stellgliedern einerseits und der speicherprogrammierbaren Steuerschaltung ganz erheblich reduziert.

Vorzugsweise ist der Zentraleinheit ein Zustandsregister
zum Abspeichern des Zustandes der Sensoren und Stellglieder zugeordnet, das mit den Codier-Decodierschaltungen
der Sensoren und Stellglieder über einen Multiplexer und
das BUS-System verbindbar ist.

Anhand der Zeichnung, in der ein Ausführungsbeispiel des
Steuerungssystems im Prinzip dargestellt ist, wird die
Erfindung näher erläutert. Es zeigen:

Figur 1 den prinzipiellen Aufbau des Steuerungssystems,
Figur 2 ein Ausführungsbeispiel der Codier-Decodier-
        schaltungen,
Figur 3 ein Codier-Decodiermodul mit einem als Flachkabel
        ausgebildeten BUS-System und

Figur 4 ein Codier- und Decodiermodul bei Verwendung eines BUS-Leitungssystems mit geflochtenem Kabel.

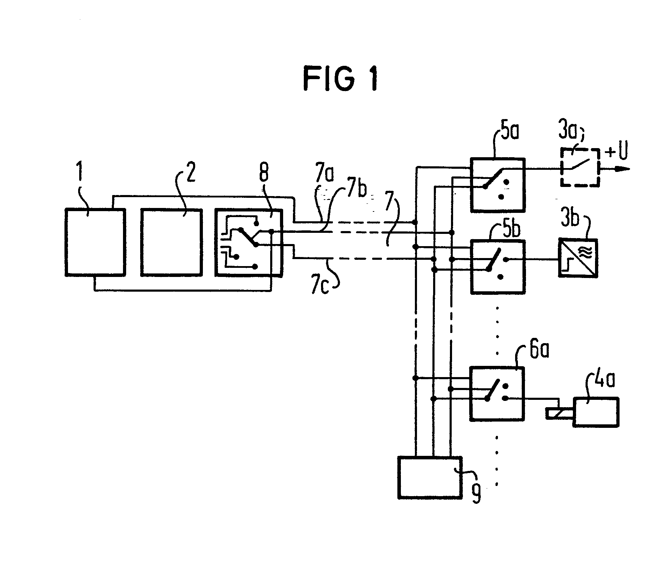

Mit 1 ist eine speicherprogrammierbare Steuerung bezeichnet, die ein Zentralsteuerwerk, die erforderlichen Zeit- und Zählbaugruppen sowie eine gemeinsame Stromversorgung enthält. An die speicherprogrammierbare Steuerung 1 ist ein Zustandsregister 2 angeschlossen, in dem die Peripheriezustände der Sensoren 3a...3n und Stellglieder 4a...4n abgespeichert sind. Der Übersicht halber sind in Figur 1 nur die beiden Sensoren 3a und 3b sowie nur ein Stellglied 4a dargestellt. Die Sensoren 3a...3n und Stellglieder 4a...4n sind mit Codier-Decodierschaltungen 5a...5n und die Stelllgieder 4a...4n mit Codier-Decodierschaltungen 6a...6n versehen, wobei die Codier-Decodierschaltungen 5a...5b und 6a...6n vorzugsweise gleich ausgebildet sind. Diese Codier-Decodierschaltungen dienen zum Anwählen der einzelnen Sensoren 3a...3n bzw. Stellglieder 4a...4n über ein Leitungssystem 7 mit Hilfe eines Multiplexers 8, welcher mit dem Zustandsregister 2 in Verbindung steht. Das Leitungssystem 7 steht mit sämtlichen Sensoren 3a...3n und Stellgliedern 4a...4n nach Art eines BUS-Systems in Verbindung, so daß diese über den Multiplexer 8 und das Zustandsregister 2 mit der Zentraleinheit der speicherprogrammierbaren Steuerung 1 verbindbar sind. Das als BUS-System wirkende Leitungssystem 7 besteht beispielsweise aus den Einzelleitungen 7a, 7b und 7c, wobei beispielsweise die Leitung 7a zur Stromversorgung und als Freigabe-Signalleitung dienen kann. Die Leitung 7b dient, wie der schematischen Figur 1 zu entnehmen ist, als Taktleitung zum Schalten des Multiplexers 8 sowie zum Weiterschalten der in den Codier-Decodierschaltungen 5a...5n bzw. 6a...6n befindlichen Zählern. Die Leitung 7c dient als eigentliche Datenleitung. Das Leitungssystem 7 ist mit einer Baugruppe 9 abgeschlossen, die zum Zwecke der Anpassung dient.

In Figur 1 ist der Sensor 3a symbolisch als Endschalter dargestellt, während der Sensor 3b als induktiver Näherungsschalter (Bero) angedeutet ist. Von den Stellgliedern 4a...4n ist lediglich das Stellglied 4a dargestellt und zwar als Symbol für ein Magnetventil, dessen Endstellungen beispielsweise mit Hilfe der Sensoren 3a und 3b erfaßt werden. An das Leitungssystem 7 kann eine beliebige Anzahl von Sensoren und Stellgliedern angeschaltet sein, wobei sich die Zahl der Leitungen 7a, 7b und 7c des Leitungssystems 7 selbst nicht erhöht.

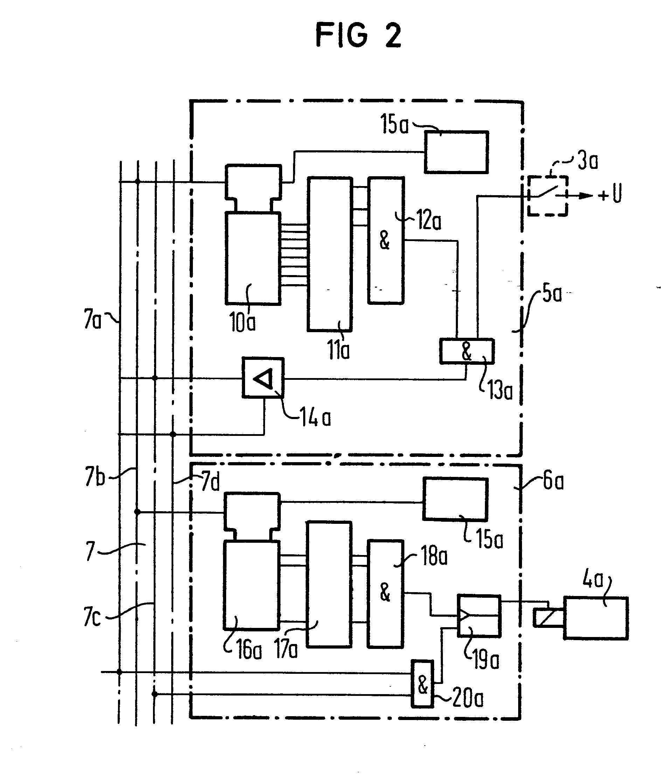

In Figur 2 sind Ausführungsbeispiele der Codier-Decodierschaltungen 5a und 6a für einen Sensor 3a und ein Stellglied 4a gemäß Figur 1 dargestellt, wobei gleichwirkende Teile mit gleichen Bezugsziffern wie in Figur 1 versehen sind. Das Leitungssystem 7 enthält eine Leitung 7a für das Freigabe-Eingangs-Signal, eine Leitung 7b für den Takt zur Synchronisierung, eine Leitung 7c als eigentliche Signalleitung und eine Leitung 7d für das Freigabe-Ausgangs-Signal.

Die Codier-Decodierschaltung 5a enthält im wesentlichen einen Zähler 10a, welcher an die Taktleitung 7b angeschlossen ist und daher mit dem Multiplexer 8 synchron arbeitet. An den Zähler 10a ist eine Auswahlschaltung 11a angeschlossen, die z.B. über Lötbrücken im Binärcode mit einer Kennziffer programmierbar ist. Diese Auswahlschaltung 11a gibt über UND-Gatter 12a und 13a das Signal von dem Sensor 3a zu dem Stellglied 4a frei und ermöglicht damit den Datenaustausch zwischen Zustandsregister 2, in dem die jeweiligen Schaltzustände gespeichert sind, und der Peripherie über die Ein-Bit-Datenleitung 7c.

0068482

Der Ausgang des UND-Gatters 13a ist nicht direkt mit der Datenleitung 7c verbunden, sondern über einen Leitungstreiber 14a, der von der Leitung 7d seinen Freigabe-Eingangsimpuls erhält. Der Zähler 10a ist mit einer Rücksetzlogik 15a versehen, um zu Beginn des Ablaufes der Steuerung sämtliche Zähler 10a...10n auf Null zurückzusetzen.

In gleicher Weise enthält die Codier-Decodierschaltung 6a einen Zähler 16a, an dem eine Auswahlschaltung 17a und ein UND-Gatter 18a angeschlossen sind. Das UND-Gatter 18a ist mit dem Eingang einer D-Kippstufe 19a verbunden, in der der jeweilige Schaltzustand des zugehörigen Stellgliedes 4a gespeichert wird. An den Rückstelleingang der D-Kippstufe 19a ist der Ausgang eines UND-Gatters 20a angeschlossen, dessen Eingänge mit den Leitungen 7a und 7c verbunden sind, d.h. die D-Kippstufe wird beispielsweise zurückgestellt, wenn der Sensor 3a die Endstellung des Stellgliedes 4a meldet. Der Zähler 16a ist ebenfalls mit einer Rücksetzlogik 15a versehen.

Es ist verständlich, daß die in Figur 2 dargestellten Codier-Decodierschaltungen 5a und 6a auch anders ausgebildet sein können.

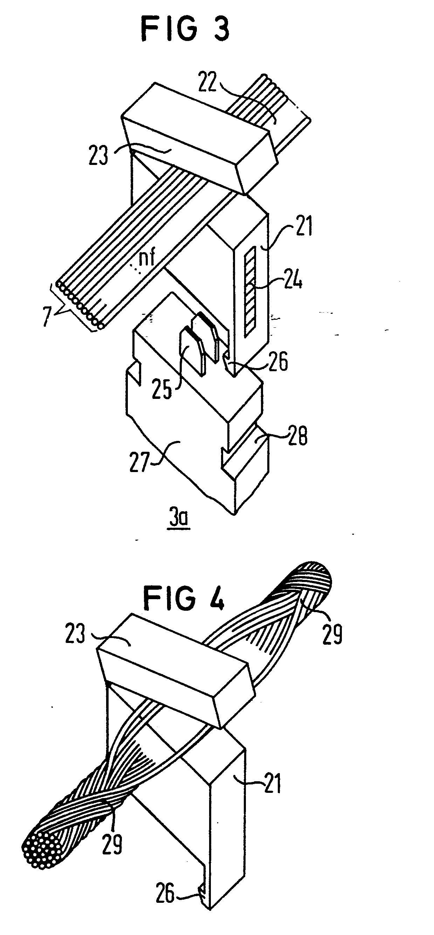

Figur 3 zeigt ein Ausführungsbeispiel für die konstruktive Gestaltung der Codier-Decodierschaltungen 5a...5n bzw. 6a...6n. Vorzugsweise sind die Codier-Decodierschaltungen als integrierte Schaltkreise ausgeführt und in einem Gehäuse 21 untergebracht. An dieses Gehäuse wird eine als Flachkabel 22 ausgebildete BUS-Leitung 7 angeschlossen, wobei eine übliche Schneid-Klemmverbindung zur Kontaktierung vorgesehen ist, die in einem Deckel 23 untergebracht ist. Beim Aufsetzen des Deckels 23 dringen die Kontaktier-

0068482

messerchen in das Flachkabel 22 ein und stellen so die Verbindung mit der in dem Gehäuse 21 untergebrachten Codier-Decodierschaltung her. Das Gehäuse 21 weist von außen her zugängliche einstellbare Codierschalter 24 auf, über welche die Auswahlschaltung 11a bzw. 17a gemäß Figur 2 binär codiert und so jeder Codier-Decodierschaltung 5a...5n bzw. 6a...6n eine individuelle Nummer zugeordnet werden kann. Das Gehäuse 21 bzw. der Deckel 23 weisen nicht dargestellte Justierstifte auf, damit eine genaue Zuordnung der Kontaktmesserchen zu den einzelnen Adern des Flachkabels 22 erfolgt.

Das Gehäuse 21 kann auf Steckkontakte 25 eines einen Sensor 3a...3n oder ein Stellglied 4a...4n enthaltenden Gehäuses 27 aufgesteckt und über am Gehäuse 21 angeordnete Nasen 26 verrastet werden, welche in Ausnehmungen 28 des Gehäuses 27 einrasten. Auf diese Weise entsteht eine universell verwendbare Baueinheit für die Sensoren 3a...3n bzw. Stellglieder 4a...4n.

Figur 4 zeigt ein Ausführungsbeispiel, bei dem kein Flachkabel 22 gemäß Figur 3, sondern ein verdrilltes Kabel 29 Verwendung findet.

Durch diese Ausgestaltung der Sensoren und Stellglieder ist es möglich, die BUS-Leitungen mit den Codier-Decodierschaltungen vorzufertigen und bei der Montage der Maschine oder dgl. mit geringen Zeitaufwand aufzustecken.

5 Patentansprüche
4 Figuren

Patentansprüche

1. Steuerungssystem, insbesondere für automatische Fertigungsanlagen, bei welchen zur Steuerung des Fertigungsablaufes eine Vielzahl von Sensoren und Stellgliedern vorgesehen ist, welche von einer speicherprogrammierbaren Steuerung ansteuerbar und abfragbar sind, dadurch g e k e n n z e i c h n e t , daß jeder Sensor (3a...3n) und jedes Stellglied (4a...4n) mit je einer Codier-Decodierschaltung (5a...5n bzw. 6a...6n) ausgestattet ist, und daß die einzelnen Codier-Decodierschaltungen (5a...5n bzw. 6a...6n) über ein Leitungssystem (7) nach Art eines BUS-Systems untereinander und mit einer Zentraleinheit der speicherprogrammierbaren Steuerung (1) verbunden sind.

2. Steuerungssystem nach Anspruch 1, dadurch g e - k e n n z e i c h n e t , daß der Zentraleinheit der speicherprogrammierbaren Steuerung (1) ein Zustandsregister (2) zum Abspeichern des Zustandes der Sensoren (3a...3n) und Stellglieder (4a...4n) zugeordnet ist, das mit den Codier-Decodierschaltungen (5a...5n bzw. 6a...6n) der Sensoren (3a...3n) und Stellglieder (4a...4n) über einen Multiplexer (3) und das BUS-System (7) verbindbar ist.

3. Steuerungssystem nach Anspruch 1 oder 2, dadurch g e k e n n z e i c h n e t , daß das BUS-System (7) mit einer entsprechenden Baugruppe (9) abgeschlossen ist.

4. Steuerungssystem nach einem der Ansprüche 1 bis 3, dadurch g e k e n n z e i c h n e t , daß die Codier-Decodierschaltungen (5a...5n bzw. 6a...6n) als integrierte Schaltkreise ausgebildet und in einem Gehäuse (21) untergebracht sind, welches so ausgebildet ist,

0068482

81 P 7064 E

daß es mit den Sensoren (3a...3n) bzw. Stellgliedern
(4a...4n) eine Baueinheit bildet.

5. Steuerungssystem nach Anspruch 4, dadurch  g e -
k e n n z e i c h n e t  , daß als BUS-Leitung (7) ein
Flachkabel (21) verwendet ist, an das die Codier-Decodierschaltungen (5a...5n bzw. 6a...6n) der Sensoren
(3a...3n) und Stellglieder (4a...4n) mit Hilfe einer
Schneid-Klemmverbindung anschließbar ist.

0068482

81 P 7064 E

## Bezugszeichenliste

| | |
|---|---|
| 1 | speicherprogrammierbare Steuerung |
| 2 | Zustandsregister |
| 3a...3n | Sensoren |
| 4a...4n | Stellglieder |
| 5a...5n | Codier-Decodierschaltungen |
| 6a...6n | " |
| 7 | Leitungssystem |
| 7a...7d | Leitungen |
| 8 | Multiplexer |
| 9 | Baugruppe |
| 10a...10n | Zähler |
| 11a...11n | Auswahlschaltungen |
| 12a...12n | UND-Gatter |
| 13a...13n | " |
| 14a...14n | Leitungstreiber |
| 15a...15n | Rücksetzlogik |
| 16a...16n | Zähler |
| 17a...17n | Auswahlschaltungen |
| 18a...18n | UND-Gatter |
| 19a...19n | D-Kippstufe |
| 20a...20n | UND-Gatter |
| 21 | Gehäuse |
| 22 | Flachkabel |
| 23 | Deckel |
| 24 | Codierschalter |
| 25 | Steckkontakt |
| 26 | Nasen |
| 27 | Gehäuse |
| 28 | Ausnehmungen |
| 29 | verdrilltes Kabel |

FIG 1

FIG 2

FIG 3

3a

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | BCC-NACHRICHTEN, Band 55, Nr. 8/9, September 1973, Seiten 200-20, Mannheim (DE); D.KLEIM et al.: "Der Aufbau des Systems Procontic". *Abbildung 1, Seite 205, Spalte 1, Zeile 3 bis Spalte 3, Zeile 5* | 1 | G 05 B 19/04 |
| Y | BCC-NACHRICHTEN | 2,3,5 | |
| | --- | | |
| Y | GB-A-2 046 476 (SHELTON) *Figuren 1,2; Seite 1, Zeile 116 bis Seite 2, Zeile 38; Zusammenfassung* | 1,2,5 | |
| | --- | | |
| Y | MICROPROCESSOR SYSTEMS: SOFTWARE, FIRMWARE AND HARDWARE, SIXTH EUROMICRO SYMPOSIUM ON MICROPROCESSING AND MICROPROGRAMMING, 16.-18. September 1980, Seiten 285-296, London (GB); P.L.BORRILL: "Microprocessor bus structures and standards". *Figur 1; Seite 291, Zeile 20 bis Seite 292, Zeile 9* | 3 | RECHERCHIERTE SACHGEBIETE (Int. Cl. ³) G 05 B G 06 F |
| | --- | | |
| A | DE-A-2 726 537 (ALLEN-BRADLEY) *Figur 1; Ansprüche 1-3; Seite 21, Zeilen 11-30* | 1,2 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 14-10-1982 | KOLBE W.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82